# EUROPÄISCHE PATENTSCHRIFT

(11) **EP 0 585 952 B1**
(45) Veröffentlichungstag und Bekanntmachung des Hinweises auf die Patenterteilung: **27.12.1996**
(21) Anmeldenummer: 93114178.2
(22) Anmeldetag: 03.09.1993
(51) Int. Cl.: B62D 33/037

(54) **Riegelspannverschluss für abklappbare Bordwände von Lastfahrzeugen**
Bolt tensioning lock for hinged tailboards of lorries
Fermeture de serrage à verrou pour ridelles rabattables de camions

(30) Priorität: 04.09.1992 DE 9211947 U
(43) Veröffentlichungstag der Anmeldung: 09.03.1994
(73) Patentinhaber: F. HESTERBERG & SÖHNE GmbH & Co. KG, D-58256 Ennepetal (DE)
(72) Erfinder: Feinbier, Joachim, Dipl.-Ing., D-58256 Ennepetal (DE); Nieland, Friedhelm, D-58339 Breckerfeld (DE); Tiedtke, Henning, Dipl.-Ing., D-58256 Ennepetal (DE); Bosch, Heiko, D-58339 Breckerfeld (DE); Sterner, Bernd, D-58099 Hagen (DE)
(74) Vertreter: Kneissl, Richard, Dr.

(56) Entgegenhaltungen:
- DE-A- 196 080
- DE-A- 2 613 319
- DE-U- 9 011 442

## Beschreibung

Die Erfindung betrifft einen Riegelspannverschluß für abklappbare Bordwände von Lastfahrzeugen gemäß dem Oberbegriff des Anspruchs 1.

Ein Riegelspannverschluß dieser Art ist aus dem deutschen Gebrauchsmuster 90 11 442 bekannt. Der bekannte Riegelspannverschluß besitzt gegenüber früheren ähnlichen Riegelspannverschlüssen den Vorteil, daß er sich nicht öffnen läßt, wenn Ladegut gegen die Bordwand drückt. Es kommt nicht selten vor, daß während der Fahrt Ladegut verrutscht und gegen die Bordwand drückt. Wird dann der Bordwandverschluß geöffnet, so wird die Bordwand heruntergeschleudert, wobei auch Ladegut herunterfallen kann. Dabei kann es leicht zu Verletzungen kommen.

Nachteilig an dem bekannten Verschluß ist, daß das eine auf einem beweglichen Teil des Verschlusses vorgesehene Element der Einrastvorrichtung auf der Seite der Federanordnung liegt, die dem Riegelhaken benachbart ist. Die Federanordnung ist an der Achse zwischen der Handhabe und dem Verbindungsglied angeordnet. Wenn diese Federanordnung in der Schließstellung des Riegelspannverschlusses zu stark zusammengedrückt ist, was beispielsweise durch ein zu starkes Einschrauben des Riegelhakens in den Riegelstumpf erfolgen kann, dann werden beim Schließen des Verschlusses die beiden Elemente der Einrastvorrichtung bereits aneinander vorbeigeführt,so daß sie beim Öffnen des Verschlusses nicht mehr in Eingriff kommen können. Bei einem solchen Verschluß ist es sehr wichtig, daß der Riegelhaken in den Riegelstumpf in der Schließstellung nur so weit eingeschraubt ist, daß die beiden Einrastelemente noch nicht aneinander vorbei geführt sind.

Die Fahrer von Lastfahrzeugen und auch andere Bediener von solchen Riegelspannverschlüssen sind sehr oft technisch nicht sehr bewandert, so daß sie die Einstellung des Riegelhakens bezüglich des Riegelstumpfes nicht immer in der Weise vornehmen können, daß die Einrastelemente beim öffnen des Verschlusses tatsächlich in Einraststellung gelangen, wenn Innendruck auf der Bordwand liegt.

Der Erfindung lag die Aufgabe zugrunde, den bekannten Riegelspannverschluß derart zu verbessern, daß im Falle von Innendruck gegen die Bordwand die Einrastvorrichtung sicher arbeitet, und zwar unabhängig davon, wie weit der Riegelhaken in den Riegelstumpf eingeschraubt ist.

Die Lösung dieser Aufgabe ergibt sich durch die im Kennzeichen des Patentanspruchs 1 angegebene Maßnahme.

Der im Anspruch 1 verwendete Ausdruck "Gehäuse" umfaßt alle Arten von Vorrichtungen, die an einer Bordwand befestigt werden können und die Stege, Vorsprünge, Rücksprünge oder dgl. aufweisen, mit deren Hilfe die beweglichen Teile angelenkt oder geführt werden können. Unter dem Ausdruck "Gehäuse" sind insbesondere Einbauwannen zu verstehen. Die beiden Elemente der Einrastvorrichtung können jeweils am Gehäuse und/oder an jedem beweglichen Teil des Riegelspannverschlusses vorliegen, solange das betreffende bewegliche Teil in dem Abschnitt des Antriebs für den Riegelhaken liegt, der sich auf der Seite der Federanordnung befindet, die dem Riegelhaken gegenüberliegt.

Dadurch, daß die Lage der Elemente der Einrastvorrichtung beim erfindungsgemäßen Riegelspannverschluß durch das Hinein- oder Herausschrauben des Riegels in bzw. aus den Riegelstumpf nicht verändert werden kann, liegen in der Schließstellung des erfindungsgemäßen Riegelspannverschlusses die Elemente der Einrastvorrichtung immer so zueinander, daß die Einrastvorrichtung beim Öffnen des Riegelverschlusses und bei Innendruck gegen die Bordwand sicher einrastet.

Die beigefügten Zeichnungen zeigen mehrere Ausführungsformen.

In den Zeichnungen zeigen
- Figur 1: eine Aufsicht auf eine erste Ausführungsform des erfindungsgemäßen Riegelspannverschlusses;
- Figur 2: einen Längsschnitt durch Figur 1, wobei der Verschluß geschlossen ist;
- Figur 3: einen Längsschnitt durch Figur 1, wobei der Verschluß geöffnet ist;
- Figur 4: eine Aufsicht auf eine weitere Ausführungsform des erfindungsgemäßen Riegelspannverschlusses;
- Figur 5: einen Längsschnitt durch Figur 4, wobei die geöffnete Handhabe strichpunktiert dargestellt ist;
- Figur 6: eine Aufsicht auf eine weitere Ausführungsform des erfindungsgemäßen Riegelspannverschlusses;
- Figur 7: einen Schnitt durch Figur 6 an der Linie VII-VII;
- Figur 8: einen Schnitt durch Figur 6 an der Linie VIII-VIII; und
- Figur 9: einen ähnlichen Schnitt wie Figur 8, wobei jedoch die Handhabe etwas geöffnet ist.

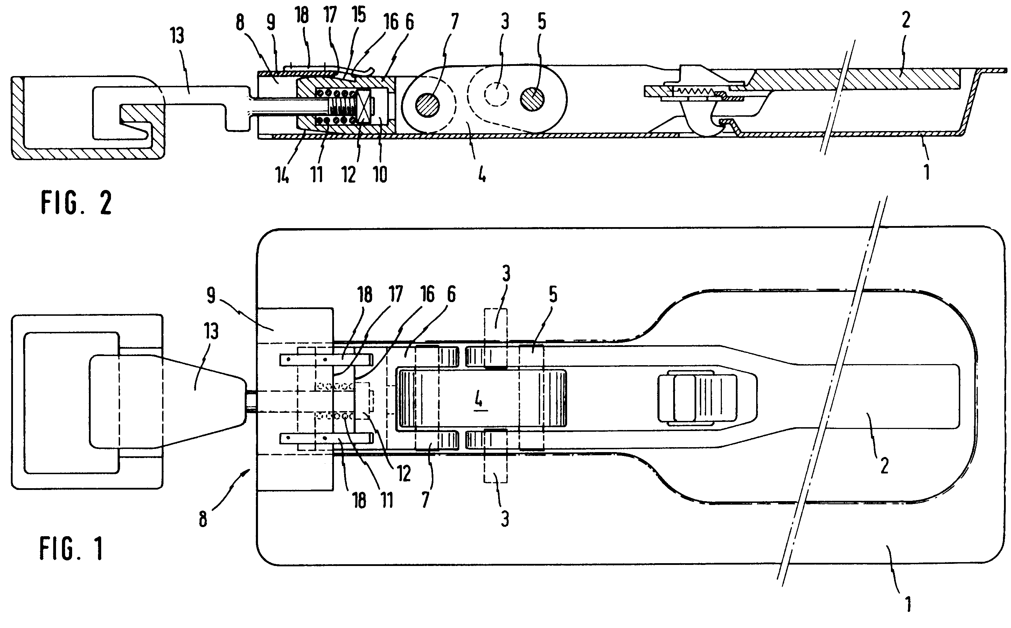

Der Riegelspannverschluß gemäß den Figuren 1 bis 3 besitzt eine Einbauwanne 1, in der eine gabelförmige Handhabe 2 mittels zweier Achsen 3 angelenkt ist. Im gabelförmigen Teil der Handhabe 2 ist ein Ende eines Verbindungsglieds 4 mittels einer Achse 5 angelenkt. Das andere Ende des Verbindungsglieds ist an einem Riegelstumpf 6 mittels einer Achse 7 angelenkt. Der Riegelstumpf ist in einem kastenförmigen Teil 8, der durch die Einbauwanne 1 und eine Abdeckplatte 9 gebildet wird, geführt. Der Riegelstumpf weist eine von einer Seite zur anderen Seite durchgehende Ausnehmung 10 auf, in der eine Feder 11 angeordnet ist, die sich an einem Druckstück 12 abstützt. In das Druckstück 12 ist ein Riegelhaken 13 eingeschraubt. Durch Verdrehen des Riegelhakens 13 kann die Länge des aus dem Riegelstumpf 6 und dem Riegelhaken 13 bestehenden Riegels verändert werden. Der Riegelstumpf weist auf seiner Unterseite eine Abrundung 14 und an seiner Oberseite eine Stufe 15 mit einer Kante 16 auf.

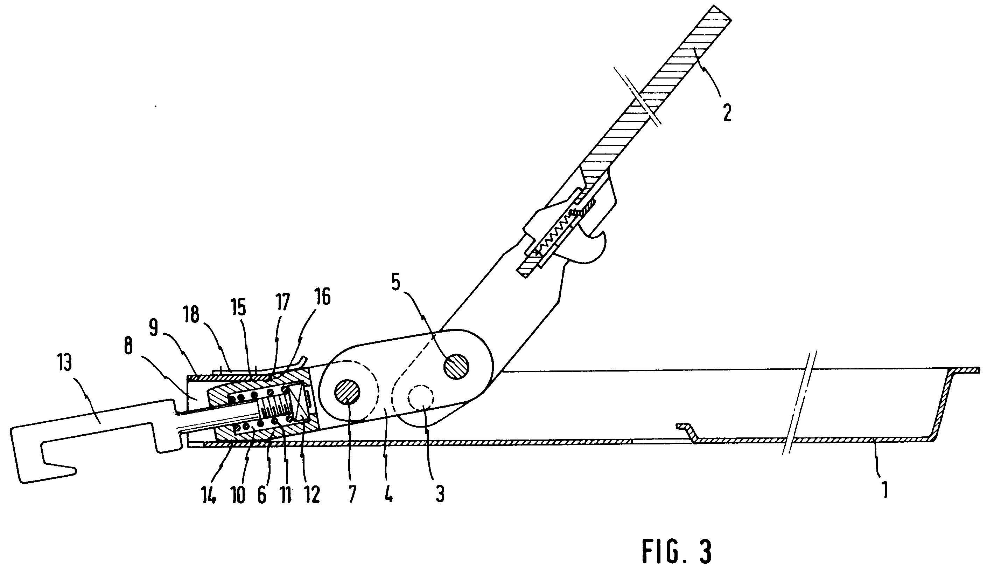

Wenn bei Ladungsdruck gegen die Bordwand der Riegelspannverschluß geöffnet wird, dann wird die in Figur 3 dargestellte Stellung erreicht, bei der die Kante 16 an der Stufe 15 mit einer Kante 17 der Abdeckplatte 9 in Anlage kommt. Der Verschluß läßt sich dann nicht mehr weiter öffnen. Erst nachdem der Innendruck auf die Bordwand beseitigt ist, läßt sich der aus Riegelhaken 13 und Riegelstumpf 6 bestehende Riegel wieder in die Lage seiner normalen Bewegungsrichtung ausrichten, so daß die Kanten 16 und 17 nicht mehr einander gegenüberliegen und der Verschluß weiter geöffnet werden kann. Die Ausrichtung des Riegels wird dabei durch zwei Federn 18 unterstützt. Es ist ohne weiteres ersichtlich, daß durch die Anbringung der Federanordnung (Feder 11 und Druckstück 12) zwischen Riegelstumpf 6 und Riegelhaken 13 die Lage der Kanten 16 und 17, die die Elemente der Einrastvorrichtung bilden, nicht mehr verändert werden kann. Es ist also unmöglich, daß ungeübte Bedienungspersonen durch unrichtige Einstellung des Riegelhakens die Einrastvorrichtung außer Wirkung setzen.

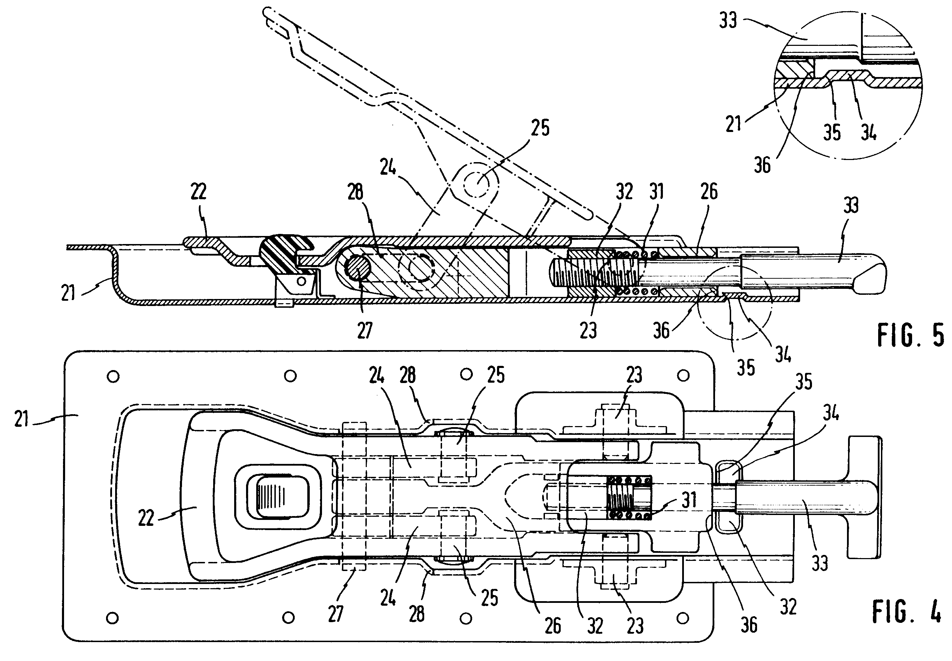

Der Riegelspannverschluß gemäß den Figuren 4 und 5 besitzt ebenfalls eine Einbauwanne 21, in der eine gabelförmige Handhabe 22 mittels zweier Achsen 23 angelenkt ist. Die einen Enden zweier Verbindungsglieder 24 sind mittels zweier Achsen 25 an der Handhabe 22 angelenkt. Ein gabelförmiger Riegelstumpf 26 ist mittels einer Achse 27 an den anderen Enden der Verbindungsglieder 24 angelenkt. Die seitlich überstehenden Stummel der Achse 27 sind in zwei Schlitzen 28 geführt, die in seitlichen Wandungen der Einbauwanne 21 ausgebildet sind. Im gabelförmigen Teil des Riegelstumpfs 26 ist ein Druckstück 32 angeordnet, an dem sich eine Feder 31 abstützt. In das Druckstück 32 ist ein T-förmiger Riegelhaken 33 eingeschraubt. Der aus dem Riegelstumpf 26 und dem Riegelhaken 33 bestehende Riegel ist durch Verdrehen des Riegelhakens 33 längenverstellbar. Auf dem Boden der Einbauwanne 21 ist eine Auswölbung 34 vorgesehen. Eine Kante 35 derselben liegt in der Schließstellung kurz vor der Stirnkante 36 des Riegelstumpfs 26.

Wenn versucht wird, bei Innendruck diesen Verschluß zu öffnen, dann wird der Riegelstumpf 26 fest gegen den Boden der Einbauwanne 21 gedrückt, so daß die Kante 35 der Auswölbung 34 mit der Stirnkante 36 des Riegelstumpfs 26 in Anlage kommt und der Verschluß sich nicht weiter öffnen läßt. Erst nach Wegnahme des Innendrucks wird der Riegelstumpf 26 nicht mehr fest gegen den Boden der Einbauwanne 21 gedrückt, so daß die Stirnkante 36 des Riegelstumpfs 26 über die (etwas abgerundete) Kante 35 der Auswölbung 34 gleiten kann.

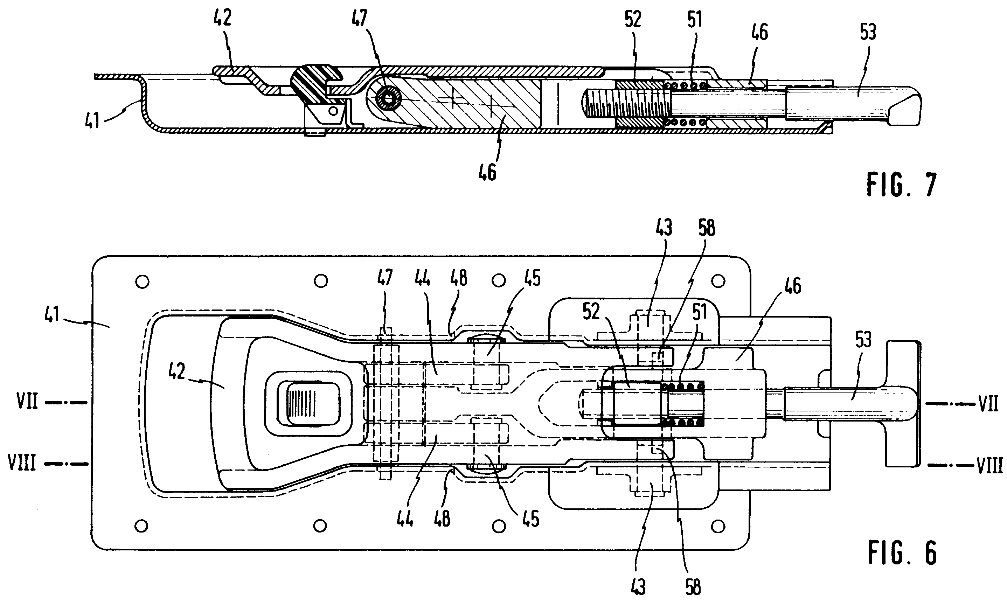

Die Ausführungsform der Figuren 6 bis 9 entspricht in ihren wesentlichen Teilen der Ausführungsform der Figuren 4 und 5. Sie zeigt zwei weitere Möglichkeiten der Hemmung des Öffnungsvorgangs des Riegelverschlusses, wenn Innendruck gegen die Bordwand liegt. Die einzelnen Teile entsprechen - bis auf die Einrastvorrichtung - im wesentlichen den Teilen der Ausführungsform der Figuren 4 und 5. Sich entsprechende Teile sind gegenüber der vorhergehenden Ausführungsform mit einer um die Zahl 20 erhöhten Bezugsziffer versehen (also Handhabe 41 statt 21).

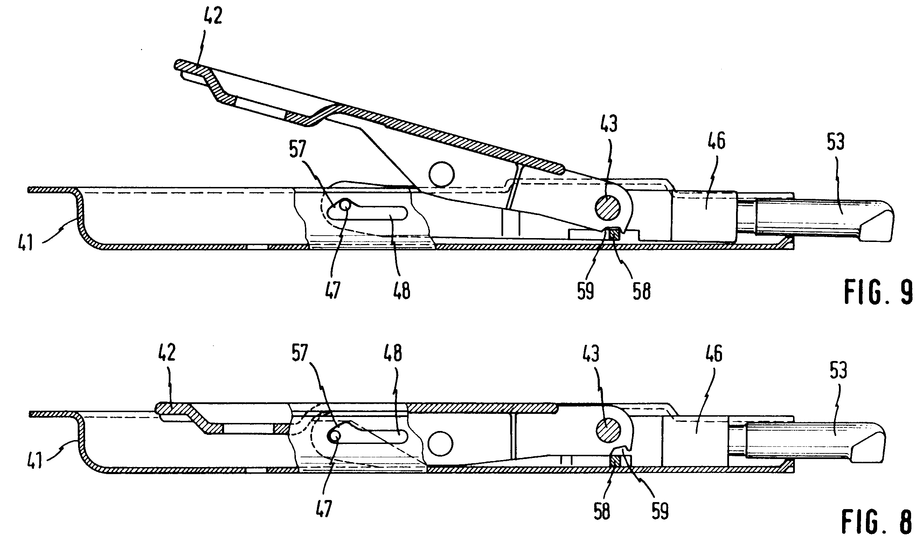

Die Schlitze 48 in den Seitenwandungen der Einbauwanne 41, die den Schlitzen 28 in der Ausführungsform der Figuren 4 und 5 entsprechen, weisen hier nach oben gerichtete Ausbuchtungen 57 auf. Wenn Innendruck gegen die Bordwand liegt, dann wird beim Öffnen des Riegelverschlusses der aus dem Riegelstumpf 46 und dem Riegelhaken 53 bestehende Riegel in die in Figur 9 gezeigte Lage gekippt, so daß die Fortsätze der Achse 47, die der Achse 27 in der Ausführungsform der Figuren 4 und 5 entspricht, in die Ausbuchtungen 57 gedrückt werden. Der Verschluß läßt sich dann nicht weiter öffnen. Erst nach Wegnahme des Innendrucks kann der Riegel wieder in seine in Figur 8 gezeigte Normallage geschwenkt werden, so daß die Fortsätze der Achse 47 nicht mehr in der Ausbuchtung 57 gefangengehalten werden und sich der Riegelverschluß öffnen läßt.

Die andere Hemmvorrichtung, die in den Figuren 6 bis 9 gezeigt ist, besteht aus seitlichen Fortsätzen 58 am Riegelstumpf 46 und Kerben 59 an der Handhabe 42. Wenn versucht wird, bei Innendruck gegen die Bordwand den Verschluß zu öffnen, dann schwenkt der Riegel in die in Figur 9 gezeigte Lage, wodurch die Fortsätze 58 angehoben werden und in die Kerben 59 an der Handhabe 42 einrasten. Ein weiteres öffnen des Verschlusses ist dann nicht mehr möglich. Wenn nach Wegnahme des Innendrucks der Riegel aus der von Figur 9 in Figur 8 gezeigten Lage zurückkehrt, kommen die Fortsätze 58 außer Eingriff mit den Kerben 59, so daß der Verschluß geöffnet werden kann.

Der Verschluß der Figuren 6 bis 9 besitzt zwei Hemmreinrichtungen, die einzeln oder gemeinsam in einem erfindungsgemäßen Riegelspannverschluß vorgesehen werden können.

## Patentansprüche

1. Riegelspannverschluß für abklappbare Bordwände von Lastfahrzeugen, mit einem in einem Gehäuse, vorzugsweise einer Einbauwanne, (1, 21, 41) angeordneten längenverstellbaren Riegel (6, 13; 26, 33; 46, 53), der aus einem Riegelstumpf (6, 26, 46) und aus einem in diesen eingeschraubten Riegelhaken (13, 33, 53) besteht und der mittels einer im Gehäuse angelenkten Handhabe (2, 22, 42) über ein einerseits an der Handhabe und andererseits am Riegelstumpf angelenktes Verbindungsglied (4, 24, 44) in Verriegelungsstellung bringbar ist, in welcher sich die Anlenkachse (5, 25, 45) zwischen dem Verbindungsglied und der Handhabe in einer Übertotpunktlage befindet, wobei der Riegelhaken gegenüber der Einbauwanne durch eine Federanordnung (11, 12; 31, 32; 51, 52) abgefedert ist, wobei weiterhin der Riegel in einer waagrechten und senkrecht zur Bordwand verlaufenden Ebene schwenkbar ist und wobei außerdem auf einem beweglichen Teil des Verschlusses ein Element (16, 36, 58) einer Einrastvorrichtung angeordnet ist, das mit einem Gegenelement (17, 35, 59) der Einrastvorrichtung, die sich an einem anderen Teil des Verschlusses befindet, in Eingriff kommt, wenn der Riegel in einer durch Innendruck auf die Bordwand hervorgerufenen, gegenüber seiner normalen Bewegungsrichtung geschwenkten Lage von der Verriegelungsstellung in die Offenstellung bewegt wird, wobei der Eingriff erfolgt, noch bevor der Riegelhaken von dem Gegenelement freikommt, dadurch gekennzeichnte, daß beide Elemente (16, 17; 36, 35; 58, 59) der Einrastvorrichtung jeweils an Teilen des Verschlusses vorgesehen sind, deren Lage durch unterschiedliche Beanspruchung der Federanordnung (11, 12; 31, 32; 51, 52) nicht beeinflußbar ist.

2. Riegelspannverschluß nach Anspruch 1, dadurch gekennzeichnet, daß die Federanordnung (11, 12; 31, 32; 51, 52) zwischen dem Riegelhaken (13, 33, 53) und dem Riegelstumpf (6, 26, 46) vorgesehen ist.

3. Riegelspannverschluß nach Anspruch 2, dadurch gekennzeichnet, daß das Gehäuse (1) eine kastenförmige Führung (8) für den Riegelstumpf (6) aufweist und daß der Riegelstumpf durch mindestens eine Abrundung (14) in der waagrechten und senkrecht zur Bordwand verlaufenden Ebene schwenkbar ist.

4. Riegelspannverschluß nach Anspruch 2, dadurch gekennzeichnet, daß die Achse (27, 47), die das Verbindungsglied (24, 44) und den Riegelstumpf (26, 46) verbindet, in seitlichen Längsschlitzen (28, 48) des Gehäuses (21, 41) geführt und dadurch in der waagrechten und senkrecht zur Bordwand verlaufenden Ebene schwenkbar ist.

5. Riegelspannverschluß nach Anspruch 3 oder 4, dadurch gekennzeichnet, daß am Riegelstumpf (6, 26) eine Kante (16, 36) vorgesehen ist, die mit einer weiteren, zur ersten Kante parallelen Kante (17, 35) am Gehäuse (1, 21) die beiden Elemente der Einrastvorrichtung bildet.

6. Riegelspannverschluß nach den Ansprüchen 3 und 5, dadurch gekennzeichnet, daß die Kante (16) am Riegelstumpf (6) in einer in demselben ausgebildeten Stufe (15) liegt und daß die Kante (17) am Gehäuse (1) auf einer Abdeckung (9), die zusammen mit dem Gehäuse (1) die kastenförmige Führung (8) bildet, angeordnet ist.

7. Riegelspannverschluß nach den Ansprüchen 4 und 5, dadurch gekennzeichnet, daß die Kante (36) am Riegelstumpf (26) durch die Stirnseite desselben gebildet wird und daß die Kante (35) am Gehäuse (21) durch eine Auswölbung (34) am Boden des Gehäuses gebildet wird.

8. Riegelspannverschluß nach Anspruch 4, dadurch gekennzeichnet, daß die seitlichen Längsschlitze (48) im Gehäuse (41) in dem Bereich, in dem die Achse (47) zwischen dem Verbindungsglied (44) und dem Riegelstumpf (46) in der geschlossenen Stellung des Verschlusses liegt, eine vom Gehäuseboden weggerichtete Ausbuchtung (57) aufweisen, die zusammen mit der genannten Achse (47) die Elemente der Einrastvorrichtung bilden.

9. Riegelspannverschluß nach Anspruch 3, 4 oder 8, dadurch gekennzeichnet, daß von der Einrastvorrichtung ein Element am Riegelstumpf (46) und das andere an der Handhabe (42) vorgesehen ist.

10. Riegelspannverschluß nach Anspruch 9, dadurch gekennzeichnet, daß das Element der Einrastvorrichtung auf dem Riegelstumpf aus mindestens einem Fortsatz (58) besteht, der bei durch Innendruck auf die Bordwand geschwenktem Riegel in eine in der Handhabe (42) vorgesehene Ausnehmung (59), welche das andere Element der Einrastvorrichtung bildet, eingreift.

## Claims

1. A toggle-type bolt fastening for swing-down tailboards or sides of lorries, comprising a longitudinally movable bolt (6, 13; 26,33; 46, 53), which is disposed in a housing, preferably a mounting well (1, 21, 41), and which consists of a bolt stub (6, 26, 46) and a bolt hook (13, 33, 53) screwed into the latter, and which can be brought into the locking position by means of a handle (2, 22, 42) pivotally disposed in the housing, via a connecting member (4, 24, 44), one end of which is articulated on the handle and the other end of which is articulated on the bolt stub, in which locking position the axis of articulation (5, 25, 45) between the connecting member and the handle is in a top dead-centre position, the bolt hook being resiliently supported relatively to the mounting well by a spring assembly (11, 12; 31, 32; 51, 52), the bolt also being pivotable in a horizontal plane extending perpendicularly to the tailboard or side, and wherein in addition an element (16, 36, 58) of a latching device is disposed on a movable part of the fastening and engages a companion element (17, 35, 59) of the latching device situated on another part of the fastening when the bolt is moved from the locking position into the open position in a pivoted position relative to its normal direction of movement as a result of internal pressure on the tailboard or side, engagement taking place before the bolt hook is free of the companion element, characterised in that the two elements (16, 17; 36, 35; 58, 59) of the latching device are respectively provided on parts of the fastening whose position is not capable of being influenced by different stressing of the spring assembly (11, 12; 31, 32; 51, 52).

2. A toggle-type bolt fastening according to claim 1, characterised in that the spring assembly (11, 12; 31, 32; 51, 52) is provided between the bolt hook (13, 33, 53) and the bolt stub (6, 26, 46).

3. A toggle-type bolt fastening according to claim 2, characterised in that the housing (1) has a box-shaped guide (8) for the bolt stub (6) and in that the bolt stub is pivotable by means of at least one radiusing (14) in the horizontal plane extending perpendicularly to the tailboard or side.

4. A toggle-type bolt fastening according to claim 2, characterised in that the shaft (27, 47) connecting the connecting member (24, 44) and the bolt stub (26, 46) is guided in lateral slots (28, 48) in the housing (21, 41) and is thus pivotable in the horizontal plane extending perpendicularly to the tailboard or side.

5. A toggle-type bolt fastening according to claim 3 or 4, characterised in that the bolt stub (6, 26) is provided with an edge (16, 36) which together with another edge (17, 35) parallel to the first edge on the housing (1, 21) forms the two elements of the latching device.

6. A toggle-type bolt fastening according to claims 3 and 5, characterised in that the edge (16) on the bolt stub (6) is situated in a step (15) formed therein and in that the edge (17) on the housing (1) is disposed on a cover (9) which together with the housing (1) forms the box-shaped guide (8).

7. A toggle-type bolt fastening according to claims 4 and 5, characterised in that the edge (36) on the bolt stub (26) is formed by the end face thereof and in that the edge (35) on the housing (21) is formed by an indentation (34) at the base of the housing.

8. A toggle-type fastening according to claim 4, characterised in that the lateral slots (48) in the housing (41) have, in the zone in which the shaft (47) between the connecting member (44) and the bolt stub (46) is situated in the closed position of the fastening, a convexity (57) which extends away from the housing base and which together with the said shaft (47) forms the elements of the latching device.

9. A toggle-type bolt fastening according to claims 3, 4 or 8, characterised in that one element of the latching device is provided on the bolt stub (46) and the other on the handle (52).

10. A toggle-type bolt fastening according to claim 9, characterised in that the element of the latching device on the bolt stub consists of at least one projection (58) which, when the bolt is pivoted as a result of internal pressure on the tailboard or side, engages in a recess (59) provided in the handle (42), said recess forming the other element of the latching device.

## Revendications

1. Fermeture de serrage à verrou pour ridelles rabattables de camions, comportant un verrou (6, 13; 26, 33; 46, 53) qui est disposé dans un carter, de préférence dans une coquille d'encastrement (1, 21, 41), qui est réglable en longueur, qui est constitué d'un talon de verrou (6, 26, 46) et d'un crochet de verrou (13, 33, 53) vissé dans ce talon et qui, au moyen d'une poignée (2, 22, 42) articulée dans le carter et par l'intermédiaire d'un élément de liaison (4, 24, 44) articulé d'une part sur la poignée, d'autre part sur le talon de verrou, peut être amené en une position de verrouillage dans laquelle l'axe d'articulation (5, 25, 45) se trouve, entre l'élément de liaison et la poignée, dans une position de dépassement du point mort haut, le crochet de verrou étant mis sous contrainte par rapport à la coquille d'encastrement par un dispositif à ressort (11, 12; 31, 32; 51, 52), le verrou pouvant en outre pivoter dans un plan orienté horizontalement et perpendiculairement à la ridelle et, sur une partie mobile de la fermeture, étant en outre disposé un élément (16, 36, 58) d'un dispositif de crantage qui vient en prise avec un contre-élément (17, 35, 59) du dispositif de crantage qui se trouve sur une autre partie de la fermeture, lorsque le verrou, dans une position, provoquée par une poussée intérieure sur la ridelle, basculée par rapport à l'orientation normale de son déplacement, passe de la position de verrouillage à la position de déverrouillage, la venue en prise se faisant encore avant que le crochet de verrou soit libéré d'avec le contre-élément, caractérisée par le fait que les deux éléments (16, 17; 36, 35; 58, 59) du dispositif de crantage sont chacun prévus sur des parties de la fermeture dont la position ne peut pas être influencée par une contrainte différente exercée par le dispositif à ressort (11, 12; 31, 32; 51, 52).

2. Fermeture de serrage à verrou selon la revendication 1, caractérisée par le fait que le dispositif à ressort (11, 12; 31, 32; 51, 52) est prévu entre le crochet de verrou (13, 33, 53) et le talon de verrou (6, 26, 46).

3. Fermeture de serrage à verrou selon la revendication 2, caractérisée par le fait que le carter (1) présente pour le talon de verrou (6) un guidage en forme de caisson (8) et que le talon de verrou peut pivoter, par au moins un arrondi (14), dans le plan orienté horizontalement et perpendiculairement à la ridelle.

4. Fermeture de serrage à verrou selon la revendication 2, caractérisée par le fait que l'axe (27, 47) qui relie l'élément de liaison (24, 44) et le talon de verrou (26, 46) est guidé dans des fentes longitudinales latérales (28, 48) du carter (21, 41) et peut, de ce fait, pivoter dans le plan orienté horizontalement et perpendiculairement à la ridelle.

5. Fermeture de serrage à verrou selon la revendication 3 ou 4, caractérisée par le fait que sur le talon de verrou (6, 26) est prévue une arête (16, 36) qui, avec une autre arête (17, 35), parallèle à la première arête et disposée sur le carter (1, 21), forme les deux éléments du dispositif de crantage.

6. Fermeture de serrage à verrou selon les revendications 3 et 5, caractérisée par le fait que l'arête (16) qui se trouve sur le talon de verrou (6) se trouve dans un décrochement (15) prévu sur ce talon et que l'arête (17) qui se trouve sur le carter (1) est disposée sur une plaque de couverture (9) qui forme avec le carter (1) le guidage en forme de caisson (8).

7. Fermeture de serrage à verrou selon les revendications 4 et 5, caractérisée par le fait que l'arête (36) qui se trouve sur le talon de verrou (26) est formée par le face frontale de talon et que l'arête (35) qui se trouve sur le carter (21) est formée par un bombement (34) prévu sur le fond du carter.

8. Fermeture de serrage à verrou selon la revendication 4, caractérisée par le fait que les fentes longitudinales latérales (48) prévues dans le carter 41 présentent, dans la zone dans laquelle l'axe (47) se trouve entre l'élément de liaison (44) et le talon de verrou (46) en position verrouillée de la fermeture, un redans (57) qui est orienté en sens opposé au fond du carter et qui, avec l'axe mentionné (47), forme les éléments du dispositif de crantage.

9. Fermeture de serrage à verrou selon la revendication 3, 4 ou 8, caractérisée par le fait que, du dispositif de crantage, un élément est prévu sur le talon de verrou (46) et l'autre, sur la poignée (42).

10. Fermeture de serrage à verrou selon la revendication 9, caractérisée par le fait que l'élément de dispositif de crantage qui se trouve sur le talon de verrou est constitué d'au moins un prolongement (58) qui, si le verrou a pivoté par suite d'une poussée intérieure sur la ridelle, vient en prise dans un évidement (59) qui est prévu dans la poignée (42) et forme l'autre élément du dispositif de crantage.
